# EUROPÄISCHE PATENTANMELDUNG

(11) **EP 1 927 637 A1**
(43) Veröffentlichungstag der Anmeldung: **04.06.2008**
(21) Anmeldenummer: 06125150.0
(22) Anmeldetag: 30.11.2006
(51) Int. Cl.: C09J 5/02, C08K 3/00

(54) **Schwarze Haftvermittlerzusammensetzung und deren Detektierung**

(71) Anmelder: Sika Technology AG, 6340 Baar (CH)
(72) Erfinder: Fässler, Reto, 8048, Zürich (CH); Huck, Wolf-Rüdiger, 8044, Zürich (CH)

(57) **Zusammenfassung**

Die vorliegende Erfindung betrifft Haftvermittlerzusammensetzungen, welche mindestens eine haftvermittelnde Substanz, mindestens ein Schwarzpigment und mindestens eine lumineszierende Substanz enthalten.

Derartige Haftvermittlerzusammensetzungen lassen sich in einer einfachen Art und Weise durch Bestrahlen mit UV Licht und Analyse der emittierenden Strahlung lokalisieren und identifizieren und sind deshalb sehr geeignet für den Einsatz in automatisierten Prozessen, insbesondere beim Verglasen von Fahrzeugen.

## Beschreibung

### Technisches Gebiet

Die Erfindung betrifft das Gebiet der mit Schwarzpigmenten gefüllten Haftvermittlerzusammensetzungen und deren Verwendung als Voranstriche für Kleb- und Dichtstoffe.

### Stand der Technik

Haftvermittlerzusammensetzungen werden seit langem dazu verwendet, um die Haftung eines Kleb- oder Dichtstoffes auf einem Substrat zu verbessern.
Einerseits werden ungefüllte Haftvermittlerzusammensetzung, auch als Klarprimer (Clear Primer) bezeichnet, hierfür verwendet. Derartige klare Zusammensetzungen sind jedoch schwierig zu sehen. WO 2006/065798 A1, WO 03/106579 A1 und US 2006/0089292 A1 offenbarten derartige ungefüllte Zusammensetzungen, denen eine lumineszierende Substanz beigefügt wurde.
Anderseits werden gefüllte, insbesondere mit Russ gefüllte, Haftvermittlerzusammensetzung eingesetzt. Mit Russ gefüllte Haftvermittlerzusammensetzungen werden auch als Schwarz-Primer bezeichnet. Die schwarze Farbe des Russes, welches ein Schwarzpigment darstellt, beziehungsweise der mit Russ gefüllten Haftvermittlerzusammensetzungen, kommt dadurch zustande, dass es Licht im gesamten sichtbaren Bereich weitgehend absorbiert. Die Verwendung einer schwarzen Haftvermittlerzusammensetzung auf schwarzem Untergrund ist jedoch sehr kritisch, da nicht oder nur sehr schwierig erkannt werden kann, ob und/oder wo eine derartige schwarze Haftvermittlerzusammensetzung aufgetragen wurde oder nicht. Da die Haftvermittlerzusammensetzung eine für die Qualität eines Haftverbundes wesentliche Rolle spielt, ist diese Ungewissheit mit einem hohen Risiko verbunden.

### Darstellung der Erfindung

Die Aufgabe der vorliegenden Erfindung ist es daher Haftvermittlerzusammensetzungen, welche Schwarzpigmente enthalten, zur Verfügung zu stellen, welche auf einem schwarzen Substrat detektiert, beziehungsweise identifiziert, werden können.
Überraschenderweise wurde nun gefunden, dass diese Aufgabe durch eine Haftvermittlerzusammensetzung gemäss Anspruch 1 gelöst werden kann.
Bereits kleine Konzentrationen an lumineszierender Substanz können dazu führen, dass eine derartige Haftvermittlerzusammensetzung in einfacher Art und Weise sicher detektiert werden kann und dadurch eine darauf folgende Verklebung von hoher Qualität gewährleistet werden kann.
Die Haftvermittlerzusammensetzungen finden Verwendung als Voranstriche für Klebstoffe und/oder Dichtstoffe.
Weiterhin betrifft die vorliegende Erfindung ein Verfahren zur Detektierung einer Haftvermittlerzusammensetzung gemäss Anspruch 19, ein Verfahren zum Verkleben gemäss Anspruch 13, ein daraus resultierender Artikel gemäss Anspruch 17, sowie ein mit einer Haftvermittlerzusammensetzung beschichtetes Substrat gemäss Anspruch 11.
Weitere besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung, welche mindestens eine haftvermittelnde Substanz, mindestens ein Schwarzpigment und mindestens eine lumineszierende Substanz enthält.

Die Haftvermittlerzusammensetzung enthält eine haftvermittelnde Substanz, im Folgenden auch Haftvermittler genannt. Vorzugsweise ist der Haftvermittler ausgewählt aus der Gruppe bestehend aus Organo-Siliziumverbindungen, Organo-Titanverbindungen, Organo-Zirkoniumverbindungen, Polyepoxide, Polyisocyanate, Isocyanat aufweisende Polymere und Mischungen daraus.

Mit "Poly" beginnende Substanznamen wie beispielsweise Polyisocyanat, Polyurethan, Polyol, Polyepoxid, Polyamin, Polysulfid, bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Die Organo-Siliziumverbindung weist hierbei mindestens eine an ein Siliziumatom gebundene Hydroxygruppe, Alkoxygruppe oder Acyloxygruppe sowie mindestens einen über eine Kohlenstoff-Silizium-Bindung an ein Siliziumatom gebundenen organischen Substituenten auf. Die Organo-Titanverbindung weist hierbei mindestens einen über eine Sauerstoff-Titan-Bindung an das Titanatom gebundenen Substituenten auf. Die Organo-Zirkoniumverbindung weist hierbei mindestens einen über eine Sauerstoff-Zirkonium-Bindung an das Zirkoniumatom gebundenen Substituenten auf.

Als Organo-Siliziumverbindungen sind besonders geeignet Organo-Siliziumverbindungen der Formeln (I) oder (II) oder (III) oder (IV). 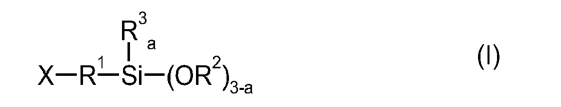 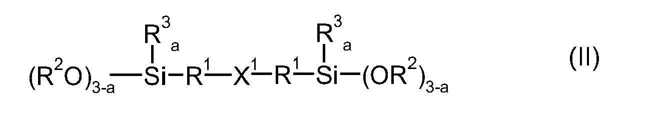 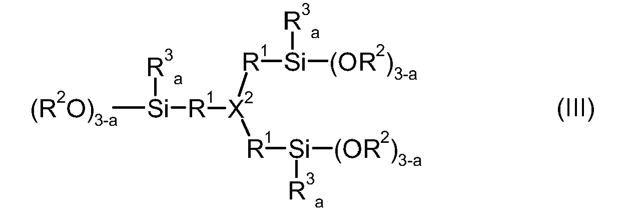 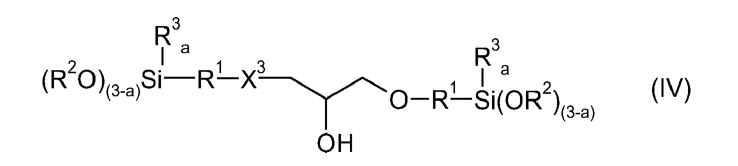
R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
R² steht hierbei für H oder für eine Alkylgruppe mit 1 bis 5 C-Atomen, insbesondere für Methyl oder Ethyl oder eine Acylgruppe, insbesondere für Acetyl.
R³ steht hierbei für eine Alkylgruppe mit 1 bis 8 C-Atomen, insbesondere Methyl.
X steht hierbei für H, oder für eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 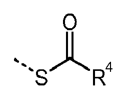 verstanden wird, wobei R⁴ für Alkyl, insbesondere mit 1 bis 20 Kohlenstoffatomen, steht und die gestrichelte Linie die Bindung zum Substituent R¹ darstellt.
X¹ steht hierbei für eine funktionelle Gruppe, welche ausgewählt ist aus der Gruppe umfassend NH, S, S₂ und S₄.
X² steht hierbei für eine funktionelle Gruppe, welche ausgewählt ist aus der Gruppe umfassend N und Isocyanurat.
X³ steht hierbei für eine funktionelle Gruppe, welche ausgewählt ist aus der Gruppe S und NR⁵, wobei R⁵ für H, Alkyl, Cycloalkyl, Aryl oder Rest der Formel -Si(R³)ₐ(OR²)₍₃₋ₐ₎ steht. Bevorzugt weisen diese Alkyl-, Cycloalkyl- oder Arylreste R⁵ 1 bis 10 C-Atome auf.
a steht hierbei für einen der Werte 0, 1 oder 2, bevorzugt 0.
Der Substituent R¹ steht insbesondere für eine Methylen-, Propylen-, Methylpropylen-, Butylen- oder Dimethylbutylengruppe. Als besonders bevorzugt wird Propylengruppe als Substituent R¹ verwendet.
Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend
Octyltrimethoxysilan, Dodecyltrimethoxysilan, Hexadecyltrimethoxysilan, Methyl-octyldimethoxysilan;
3-Glycidyloxypropyltrimethoxysilan, 3-Glycidyloxypropyltriethoxysilan;
3-Methacryloxypropyltrialkoxysilane, 3-Methacryloxypropyltriethoxysilan, 3-Methacryloxypropyltrimethoxysilan;
3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxaheptyldimethoxymethylsilan, N-(Methyl)-3-aminopropyltrimethoxysilan, N-(n-butyl)-3-aminopropyltrimethoxysilan;
3-Mercaptopropyltriethoxysilan, 3-Mercaptopropyltrimethoxysilan, 3-Mercaptopropyl-methyldimethoxysilan;
3-Acylthiopropyltrimethoxysilan;
Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.
Bevorzugt sind bei diesen genannten Organo-Siliziumverbindungen diejenigen, welche einen an das Siliziumatom gebundenen organischen Substituenten aufweisen, welcher zusätzlich noch eine funktionelle Gruppe aufweist, das heisst, welcher keine Alkylgruppe ist, und einer Formel (I) entspricht, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1H,3H,5H)-trionharnstoff (=Tris(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Als Organo-Siliziumverbindungen der Formel (IV) eignen sich insbesondere die Reaktionsprodukte von 3-Mercaptopropyltrimethoxysilan oder 3-Aminopropyltrimethoxysilan oder Bis-[3-(trimethoxysilyl)-propyl]-amin mit 3-Glycidyloxypropyltrimethoxysilan. Bevorzugt eignen sich die Reaktionsprodukte von 3-Aminopropyltrimethoxysilan und 3-Glycidyloxypropyltrimethoxysilan. Unter Organo-Siliziumverbindungen der Formel (IV) sind auch intramolekulare zyklische Umesterungsprodukte zu verstehen.

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Als über eine Sauerstoff-Titan-Bindung an das Titanatom gebundene Substituenten sind besonders geeignete Substituenten diejenigen, welche aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind.
Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.
Als Alkoxygruppen haben sich insbesondere so genannte Neoalkoxy-Substituenten, insbesondere der folgenden Formel (V), als besonders geeignet erwiesen.

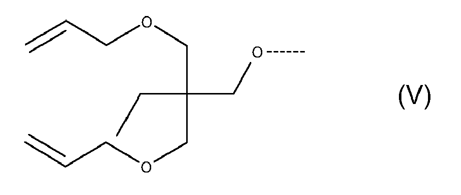

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der folgenden Formel (VI). 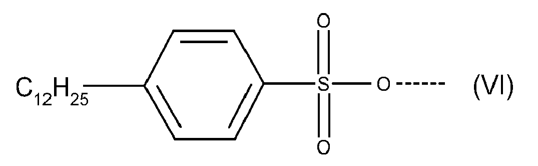 Besonders geeignet als Carboxylatgruppen haben sich insbesondere Carboxylate von Fettsäuren erwiesen. Als bevorzugtes Carboxylat gilt Decanoat.
In den obigen Formeln stellt die gestrichelte Linie die Bindung des Sauerstoffs zum Titan dar.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor® ET, TPT, NPT, BTM, AA, AA-75, AA-95, AA-105, TE, ETAM, OGT von DuPont.
Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.
Besonders bevorzugt werden Organo-Titanverbindungen, welche, über eine Sauerstoff-Titan-Bindung, an das Titanatom gebundene Substituenten der Formeln (V) und/oder (VI) enthalten.

Als Organo-Zirkoniumverbindungen sind insbesondere solche geeignet, welche mindestens eine funktionelle Gruppe tragen, welche ausgewählt ist aus der Gruppe umfassend Alkoxygruppe, Sulfonatgruppe, Carboxylatgruppe, Phosphat oder Mischungen davon, und welche über ein Sauerstoff-Zirkonium-Bindung direkt an ein Zirkoniumatom gebunden ist.
Als Alkoxygruppen haben sich insbesondere Isopropoxy- und so genannte Neoalkoxy-Substituenten, insbesondere der Formel (V), besonders geeignet erwiesen.

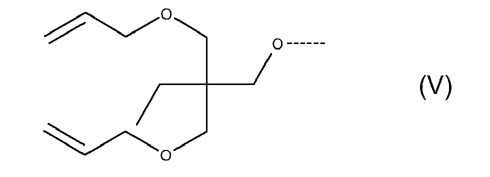

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der Formel (VI). 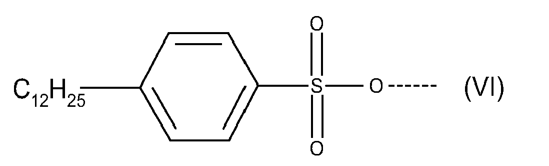 Als Carboxylatgruppen haben sich insbesondere Carboxylate von Fettsäuren besonders geeignet erwiesen. Als bevorzugte Carboxylate gelten Stearate und Isostearate.
In den obigen Formeln stellt die gestrichelte Linie die Bindung des Sauerstoffs zum Zirkonium dar.

Organo-Zirkoniumverbindungen sind kommerziell erhältlich, beispielsweise bei der Firma Kenrich Petrochemicals. Geeignete Organo-Zirkoniumverbindungen sind beispielsweise Ken-React® NZ 38J, NZ TPPJ, KZ OPPR, KZ TPP, NZ 01, NZ 09, NZ 12, NZ38, NZ 44, NZ 97.

Es ist dem Fachmann klar, dass diese Organo-Siliziumverbindungen, Organo-Titanverbindungen und Organo-Zirkoniumverbindungen unter dem Einfluss von Wasser hydrolysieren und an das Si-, Ti- oder Zr-Atom gebundene OH-Gruppen bilden. Derartige hydrolysierte, beziehungsweise teilhydrolysierte, Organo-Siliziumverbindungen, Organo-Titanverbindungen und Organo-Zirkoniumverbindungen können dann ihrerseits kondensieren und Kondensationsprodukte bilden, welche Si-O-Si, Ti-O-Ti, Zr-O-Zr Bindungen aufweisen. Sind Silane und/oder Titanate und/oder Zirkonate als Haftvermittler gemischt, sind auch gemischte Kondensationsprodukte möglich, welche Si-O-Ti, Si-O-Zr oder Ti-O-Zr Bindungen aufweisen. Ein geringer Anteil an derartigen Kondensationsprodukten ist möglich, insbesondere wenn sie löslich, emulgierbar oder dispergierbar sind.

Bevorzugt umfasst die Haftvermittlerzusammensetzung mindestens eine Organo-Siliziumverbindung. In gewissen Fällen ist eine Kombination von Organo-Siliziumverbindungen und Organo-Titanverbindungen besonders bevorzugt.

Als Polyisocyanate sind insbesondere Diisocyanate oder Triisocyanate geeignet. Bevorzugt sind kommerziell erhältliche Polyisocyanate, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), sowie beliebige Mischungen der vorgenannten Isocyanate und deren Biurete oder deren Isocyanurate. Besonders bevorzugt sind MDI, TDI, HDI und IPDI und deren Biurete oder Isocyanurate.

Isocyanatgruppen aufweisende Polymere lassen sich insbesondere aus den gerade genannten Polyisocyanaten und den weiter unten genannten Polyolen und/oder Polyaminen nach bekannter Art und Weise erhalten.
Der Anteil der haftvermittelnden Substanz beträgt 1 - 80 Gew.-%, insbesondere 5 - 70 Gew.-%, bevorzugt 10 - 40 Gew.-%, an der gesamten Zusammensetzung. Wenn die haftvermittelnde Substanz eine Organo-Siliziumverbindung oder eine Organo-Titanverbindung ist, beträgt der Anteil der haftvermittelnden Substanz an der gesamten Zusammensetzung vorzugsweise 1 - 15 Gew.-%.

Die Haftvermittlerzusammensetzung enthält weiterhin mindestens ein Schwarzpigment. Schwarzpigmente sind dem Fachmann bekannt und sind beispielsweise beschrieben in Herbst, W., Hunger, K., Industrielle Organische Pigmente (VCH Verlag, 2. Auflage, 1995) auf den Seiten 482 - 496, 583 - 584 und 640, sowie in Endriss, H., Aktuelle anorganische Bunt-Pigmente, (Vincentz Verlag, 1997) auf den Seiten 45 - 54. Bevorzugt werden Schwarzpigmente, welche in dem von der Society of Dyers and Colourists herausgegebenen Colour Index die Bezeichnung "Colour Index Pigment Black" beziehungsweise "C.I. Pigment Black" tragen.
Das in der Haftvermittlerzusammensetzung enthaltene Schwarzpigment ist vorzugsweise ausgewählt aus der Gruppe bestehend aus Russ, Eisenoxidschwarz, Chromeisenschwarz, Eisen-Mangan-Kupferoxid, Anilinschwarz, Anthrachinon- und Perylen-Pigmente. Insbesondere bevorzugt sind industriell hergestellter Russ (carbon black; im Folgenden als "Russ" bezeichnet), Eisenoxidschwarz und Anilinschwarz. Meist bevorzugt ist Russ. Der Anteil des Schwarzpigments, insbesondere Russ, an der Haftvermittlerzusammensetzung beträgt 0.1 - 15 Gew.-%, insbesondere 1 - 15 Gew.-%, bevorzugt 5 - 10 Gew.-%, an der gesamten Zusammensetzung.

Die Haftvermittlerzusammensetzung gemäss der vorhergehenden Beschreibung enthält vorzugsweise einen gemeinsamen Anteil von haftvermittelnder Substanz und Schwarzpigment, insbesondere Russ, von ≥ 10 Gew.-%, insbesondere 15 - 70 Gew.-%, bevorzugt 25 - 60 Gew.-%, an der gesamten Zusammensetzung.

Weiter enthält die Haftvermittlerzusammensetzung mindestens eine lumineszierende Substanz. Geeignete lumineszierende Substanzen sind solche, welche bei Bestrahlung mit einer Strahlung bestimmter Wellenlänge eine Strahlung unterschiedlicher Wellenlänge emittieren, insbesondere solche, welche bei Bestrahlung mit UV-Strahlung lumineszieren, bevorzugt solche, die bei Bestrahlung mit Strahlung einer Wellenlänge zwischen 240 und 400 nm lumineszieren. Dem Fachmann sind viele lumineszierende Substanzen bekannt. Derartige lumineszierende Substanzen sind beispielsweise beschrieben in "11 Kirk-Othmer Encyclopedia of Chemical Technology" (John Wiley & Sons, 4th Ed., 1994) auf den Seiten 227 - 241.
Insbesondere geeignet sind Substanzen, welche unter den Handelsmarken Uvitex® von Ciba Specialty Chemicals, Lumilux® von Riedelde Haen GmbH, Blankophor® von Bayer Chemicals und Ultraphor® von BASF kommerziell erhältlich sind. Bevorzugt wird Uvitex® OB (Ciba Specialty Chemicals).
Falls die Haftvermittlerzusammensetzung Wasser enthält sind insbesondere jene lumineszierenden Substanzen geeignet, welche unter den Handelsmarken Uvitex® NFW, Uvitex® BFA, Uvitex® MST oder Tinopal® von Ciba Specialty Chemicals und Pyranin® von Bayer Chemicals kommerziell erhältlich sind.

Die einzelnen lumineszierenden Substanzen haben bei Bestrahlung mit einer Strahlung bestimmter Wellenlänge für sich charakteristische Emissionswellenlängen. Die Emissionswellenlänge kann somit ein wichtiges Auswahlkriterium für die lumineszierende Substanz sein.
Die Menge an lumineszierender Substanz, die in der Haftvermittlerzusammensetzung vorhanden ist, liegt vorzugsweise im Bereich zwischen 0.01 - 5 Gew.-%, insbesondere 0.1 - 3 Gew.-%, bevorzugt 0.2 - 1 Gew.-%, bezogen auf das Gewicht der gesamten Zusammensetzung.

Der Gehalt an lumineszierender Substanz ist auch abhängig vom Gehalt des Schwarzpigments in der Haftvermittlerzusammensetzung. Je höher der Gehalt des Schwarzpigments ist, ist es bevorzugt, tendenziell einen höheren Gehalt an lumineszierender Substanz in der Haftvermittlerzusammensetzung zu verwenden.

In einer Ausführungsform weist die Haftvermittlerzusammensetzung zusätzlich mindestens ein hochmolekulares Polymer als Filmbildner auf.
Diese dienen dem Zweck der Filmbildung an der Oberfläche der Haftvermittlerzusammensetzung. Dieser Film verstärkt die Haftvermittlerzusammensetzung und kann gleichzeitig das beschichtete Substrat vor unerwünschten Einflüssen der Umgebung schützen.
Der Filmbildner kann funktionelle Gruppen aufweisen, welche mit der Oberfläche des beschichteten Substrats und/oder mit dem später aufgetragenen Kleb- oder Dichtstoff und/oder innerhalb der Haftvermittlerzusammensetzung reagieren können. Beispielsweise sind solche funktionellen Gruppen Hydroxyl-, Carboxyl-, Isocyanat-, Mercapto-, Epoxy- oder Alkoxysilan-Gruppen sowie Kombinationen davon. Insbesondere sind diese funktionellen Gruppen Hydroxyl-, Carboxyl-, Isocyanat-, Epoxy- oder Alkoxysilan-Gruppen oder Kombinationen davon. Bevorzugte funktionelle Gruppen sind Isocyanat-oder Epoxy- oder Alkoxysilan-Gruppen.
Es ist dem Fachmann selbstverständlich klar, dass der Filmbildner keine funktionellen Gruppen aufweisen soll, welche in der Abwesenheit von Feuchtigkeit mit sich selber oder mit anderen Bestandteilen der Haftvermittlerzusammensetzung, insbesondere der haftvermittelnden Substanzen, reagiert, da ansonsten eine frühzeitige Vernetzung erfolgen würde.
Als Filmbildner werden insbesondere Polymere ausgewählt aus einer Gruppe bestehend aus Poly(meth)acrylate, Polyurethane, Polyepoxide, Polyester, Alkoxysilan-terminierte Polymere und Isocyanatgruppen aufweisende Polymere. Bevorzugt werden Poly(meth)acrylate, Alkoxysilan-terminierte Polymere und/oder Isocyanatgruppen aufweisende Polymere.
Die hochmolekularen Polymere, die als Filmbildner eingesetzt werden, haben vorzugsweise ein mittleres Molekulargewicht von 5'000 g/mol oder mehr, insbesondere 10'000 g/mol oder mehr, bevorzugt 15'000 g/mol oder mehr. Vorzugsweise haben die hochmolekularen Polymere ein mittleres Molekulargewicht von 200'000 g/mol oder weniger, insbesondere 150'000 g/mol oder weniger, bevorzugt 100'000 g/mol oder weniger.

In einer bevorzugten Ausführungsform weist die Haftvermittlerzusammensetzung zusätzlich mindestens ein Lösungsmittel auf. Als Lösungsmittel werden insbesondere Alkohole, Ether, Ketone, Ester oder Kohlenwasserstoffe, bevorzugt Isopropanol, Ethanol, Methylethylketon, Aceton, Hexan, Heptan, Xylol, Toluol oder Acetate, insbesondere Ethylacetat oder Butylacetat, verwendet. Weiterhin kann Wasser oder Gemische von Wasser mit den genannten Alkoholen, Ether, Ketonen, Ester oder Kohlenwasserstoffen als Lösungsmittel verwendet werden. Bevorzugt werden Lösungsmittelsysteme, welche eine Siedetemperatur von ≤ 100 °C aufweisen.
Lösungsmittel werden insbesondere bei der Verwendung von Filmbildner eingesetzt.

Die Haftvermittlerzusammensetzung kann weitere Bestandteile umfassen. Derartige zusätzliche Bestandteile sind Tenside, Säuren, Katalysatoren, Biozide, Antiabsetzmittel, Trocknungsmittel, Stabilisatoren, Pigmente, Farbstoffe, Korrosionsschutzmittel, Geruchsstoffe, Thixotropiermittel, Füllstoffe, Entschäumer und dergleichen.

Die Haftvermittlerzusammensetzung kann einkomponentig oder zweikomponentig sein. Beispielsweise kann die Haftvermittlerzusammensetzung eine zweikomponentige wässrige Polyurethandispersion sein.

Die beschriebene Haftvermittlerzusammensetzung eignet sich besonders als Voranstrich, vorzugsweise als Voranstrich für Kleb- und/oder Dichtstoffe. Durch Verwendung eines derartigen Voranstrichs wird die Haftung verbessert. Durch das Vorhandensein mindestens einer lumineszierenden Substanz in der Haftvermittlerzusammensetzung eignet sich ihre Anwendung insbesondere in den folgenden zwei Fällen.

Einerseits kann ein schwarzer Voranstrich auf einem schwarzen Substrat vor dem Verkleben oder Abdichten sehr einfach, nämlich wie weiter unten im Detail beschrieben wird, nachgewiesen werden. Ein derartiger Nachweis ist insbesondere wichtig um eine gute Qualität einer Verklebung oder Abdichtung zu garantieren, da die Anwesenheit der Haftvermittlerzusammensetzung hierfür von grosser Bedeutung ist.
Andererseits kann in einem bereits erstellten Haftverbund einfach festgestellt werden, ob eine geeignete, beziehungsweise überhaupt eine, Haftvermittlerzusammensetzung eingesetzt wurde. Dies ist insbesondere wichtig in Schadensfällen, wo überprüft werden muss, ob es sich beim Schaden um einen Material- oder Anwendungsfehler handelt, insbesondere ob ein für den Prozess vorgeschriebener Auftrag einer Haftvermittlerzusammensetzung nicht eingehalten wurde.

Die Applikation der Haftvermittlerzusammensetzung kann mittels Tuch, Filz, Rolle, Sprühen, Schwamm, Pinsel, Tauchbeschichten oder dergleichen erfolgen und kann sowohl manuell als auch mittels Roboter erfolgen.

Somit umfasst die Erfindung auch ein Verfahren zur Verklebung oder zum Abdichten. Von diesem Verfahren sind insbesondere die folgenden drei Varianten bevorzugt.
Die erste Variante umfasst die Schritte
i) Applikation einer Haftvermittlerzusammensetzung gemäss vorhergehender Beschreibung auf ein zu verklebendes oder abzudichtendes Substrat **S1;**
ii) Applikation eines Klebstoffes oder Dichtstoffes auf die abgelüftete Haftvermittlerzusammensetzung, welche sich auf dem Substrat S1 befindet;
iii) Kontaktieren des Klebstoffes oder Dichtstoffes mit einem zweiten Substrat S2;
Die zweite Variante umfasst die Schritte
i') Applikation einer Haftvermittlerzusammensetzung gemäss vorhergehender Beschreibung auf ein zu verklebendes oder abzudichtendes Substrat **S1;**
ii') Applikation eines Klebstoffes oder Dichtstoffes auf die Oberfläche eines zweiten Substrates S2;
iii') Kontaktieren des Klebstoffes oder Dichtstoffes mit der abgelüfteten Haftvermittlerzusammensetzung, welche sich auf dem Substrat S1 befindet;
Die dritte Variante umfasst die Schritte
i") Applikation einer Haftvermittlerzusammensetzung gemäss vorhergehender Beschreibung auf ein zu verklebendes oder abzudichtendes Substrat **S1;**
ii") Ablüften der Haftvermittlerzusammensetzung;
iii") Applikation eines Klebstoffes oder Dichtstoffes zwischen die Oberflächen des Substrates S1 und S2;

In allen drei Varianten besteht das zweite Substrat S2 aus demselben oder unterschiedlichem Material wie das Substrat **S1.**

Typischerweise schliesst sich anschliessend an den Schritt iii), iii') oder iii") ein Schritt iv) des Aushärtens des Kleb- oder Dichtstoffes an.

Klebstoffe und Dichtstoffe sind sehr ähnlich. Beide brauchen eine gute Haftung auf dem Untergrund, um ihre Funktion optimal zu erfüllen. Bei den Klebstoffen sind die Anforderungen an die Haftung, beziehungsweise an die Kräfte, die zwischen Substrat und Klebstoff übertragen werden müssen jedoch gegenüber den Dichtstoffen noch höher. Deshalb wird die Haftvermittlerzusammensetzung insbesondere bei Klebstoffe verwendet.
Als Klebstoff kann grundsätzlich jeder Klebstoff verwendet werden. Vorzugsweise wird ein feuchtigkeitshärtender Klebstoff verwendet, insbesondere ein Klebstoff, dessen Aushärtung mittels Luftfeuchtigkeit erfolgt. Einerseits sind dies Klebstoffe basierend auf Silangruppen-terminierten Polymeren, wie sie dem Fachmann unter der Bezeichnung "MS-Polymere" bekannt sind oder andererseits auf Silangruppen-terminierten Polyurethanen, wie sie dem Fachmann unter der Bezeichnung "SPUR" (Silane Terminated Polyurethanes) bekannt sind. Die vorteilhaften Haftverbesserungen haben sich jedoch insbesondere bei Polyurethanklebstoffen oder -dichtstoffen gezeigt, insbesondere bei Polyurethanklebstoffen, welche Isocyanatgruppen aufweisende Polyurethanpolymere enthalten. Derartige Polyurethanklebstoffe sind kommerziell breit erhältlich, insbesondere unter dem Namen Sikaflex® oder SikaTack® von Sika Schweiz AG.
Als geeignete Klebstoffe auf Basis von Isocyanat-terminierten Polymeren werden ebenfalls zweikomponentige Polyurethanklebstoffe verstanden, deren erste Komponente ein Amin- oder ein Polyol und deren zweite Komponente ein Isocyanatgruppen aufweisendes Polymer oder ein Polyisocyanat umfasst. Beispiele für solche zweikomponentige bei Raumtemperatur härtende Polyurethanklebstoffe sind solche aus der SikaForce® -Produktlinie, wie sie kommerziell erhältlich sind von Sika Schweiz AG.
Als geeignete Klebstoffe auf Basis von Isocyanat-terminierten Polymeren sind weiterhin reaktive Polyurethan-Heissschmelzklebstoffe zu verstehen, die ein thermoplastisches Polymer sowie ein Isocyanat-terminiertes Polymer oder ein thermoplastisches Isocyanat-terminiertes Polymer enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit. Beispielsweise sind solche reaktiven Polyurethan-Heissschmelzklebstoffe unter dem Namen SikaMelt® kommerziell erhältlich bei Sika Schweiz AG.
Das Substrat S1 und/oder S2 kann vielfältiger Art sein. Bevorzugt ist mindestens eines der Substrate S1 oder S2 ein Schwarzpigment enthaltendes Substrat, insbesondere ein Schwarzpigment enthaltender Kunststoff, bevorzugt ein Schwarzpigment enthaltender Thermoplast. Insbesondere kann eines der Substrate S1 oder S2 Glaskeramik, insbesondere ein Schwarzpigment enthaltende Glaskeramik, sein. Weiterhin kann eines der Substrate S1 oder S2 ein Lack oder ein lackiertes Metall oder eine lackierte Metalllegierung sein.

Als thermoplastische Polymere, beziehungsweise Thermoplaste, werden grundsätzlich Kunststoffe verstanden, die in einem bestimmten Temperaturbereich, insbesondere oberhalb ihrer Gebrauchstemperatur, erweichen und sich verformen lassen. Eine Verformung dieser Thermoplaste kann beispielsweise in einem Extruder erfolgen.
Geeignete Thermoplaste sind insbesondere Polyvinylchlorid, Polycarbonate, Polyurethane, Polybutylen-(1,4)-terephthalate, Polyethylenterephthalate, Polyamide, Polyoxymethylene, Styrol-Acrylnitrile, AcrylnitrilButadien-Styrole, Polymethyl(meth)acrylat, Polystyrol, Polypropylen, Polyethylen und Mischungen davon. Insbesondere geeignet sind Polyvinylchlorid, Polycarbonate und Polyurethane. Meist bevorzugt ist Polyvinylchlorid.
Insbesondere Polyethylen und Polypropylen sind dafür bekannt nicht sehr haftfreundlich zu sein. Sie können jedoch mit bestimmten Vorbehandlungsmethoden derart modifiziert werden, dass sie für den hier vorliegenden Zweck geeignet sind. Derartige Vorbehandlungsmethoden sind insbesondere Gasphasenfluorierung oder Plasmavorbehandlungen, insbesondere Plasmavorbehandlungen bei Atmosphärendruck, wie sie beispielsweise im OpenAir-Verfahren der Firma Plasmatreat GmbH, Deutschland, realisiert ist.
Weiterhin kann der Kunststoff beispielsweise über einen Reaction Transfer Molding (RTM)- oder über ein Reaction Injection Molding (RIM)-Prozess aus reaktiven Kunststoffvorläufern hergestellt werden. Derartige hierfür geeignete reaktive Kunststoffvorläufer sind beispielsweise Polyisocyanate, Epoxidharze, Polycarbonsäuren, ungesättigte Verbindungen, wie (Meth)acrylate, ungesättigte Polyester oder Styrol. Bei dem RTM- oder RIM-Prozess werden diese Kunststoffvorläufer mit einem Additionspartner, insbesondere Polyamine, Polyole oder Polymercaptane oder einem Radikalbildner, insbesondere Peroxiden, ausgehärtet.
Das Schwarzpigment wird auf eine dem Fachmann bekannte Art und Weise in den Thermoplast oder den Kunststoffvorläufer eingebracht und vermischt. Derartige Schwarzpigment enthaltende Thermoplaste können leicht geformt werden und sind in einer grossen Vielfalt als Anbauteile verfügbar. Die nach dem RTM- oder RIM-Prozess hergestellten Schwarzpigment enthaltenden Kunststoffe weisen die durch die Form vorgegebene Gestalt auf und lassen sich so als Ein- oder Anbauteile verwenden.

In einer Ausführungsform ist das Schwarzpigment enthaltende Substrat ein Schwarzprimer.

Als Glaskeramik werden insbesondere Glaskeramiken verstanden, wie sie typischerweise im Randbereich von Fahrzeugscheiben aufgebracht werden. Der Aufbau und die Herstellung solche Glaskeramiken ist dem Fachmann, beispielsweise aus Krause H., Keramische Farben in 'Ulmann' Band 14, (VCH Verlag, 4. Ausgabe, 1977) auf den Seiten 1 - 12, bekannt.

Weiterhin umfasst die Erfindung ebenfalls Artikel, auf welchen die beschriebene Haftvermittlerzusammensetzung gemäss dem beschriebenen Verfahren aufgetragen wurde. Bei diesem Artikel handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels ist.

Weiterhin umfasst die Erfindung ein Verfahren zur Detektierung der beschriebenen Haftvermittlerzusammensetzung, umfassend mindestens die Schritte
a) Bestrahlen eines mit der Haftvermittlerzusammensetzung beschichteten Substrats oder eines verklebten Artikels mit einer Strahlung bestimmter Wellenlänge λ₁, insbesondere UV-Strahlung, bevorzugt Strahlung der Wellenlänge von 240 bis 400 nm;
b) Detektierung der von der lumineszierenden Substanz emittierten Strahlung der Wellenlänge λ₂, insbesondere mittels eines Fotodetektors. Bevorzugt wird der Fotodetektor mit einem optischen Filter versehen, der die eingestrahlte Strahlung mit der Wellenlänge λ₁ zurückhält und nur die von der lumineszierenden Substanz in der Haftvermittlerzusammensetzung emittierte Strahlung mit der Wellenlänge λ₂ zum Fotodetektor durchlässt.

Das Verfahren zur Detektierung der Haftvermittlerzusammensetzung kann in einem manuellen und/oder in einem automatisierten Verfahren durchgeführt werden.

### Beschreibung der Zeichnungen

Im Folgenden werden anhand der Zeichnungen ausgewählte Ausführungsbeispiele der Erfindung näher erläutert. Gleiche Elemente sind in den verschiedenen Figuren mit den gleichen Bezugszeichen versehen.

### Es zeigen:

- Figur 1: einen schematischen Querschnitt durch ein beschichtetes Substrat beim Detektionsverfahren;
- Figur 2: eine perspektivische schematische Darstellung des Detektionsverfahrens am Beispiel einer Automobilverglasung;
- Figur 3: eine schematische Darstellung eines Substrates mit zwei aufgetragenen Voranstrichbahnen vor (Fig. 3a) und nach (Fig. 3b) Auftrag einer Klebstoffraupe;
- Figur 4a: eine Darstellung der Blaulicht-Emission einer, mit Bahnen von Haftvermittlerzusammensetzungen von unterschiedlicher Konzentrationen an lumineszierender Substanz beschichteter, Glaskeramik;
- Figur 4b: eine grafische Darstellung der Abhängigkeit der Intensität der Licht-Emission als Funktion der Konzentration der lumineszierenden Substanz in der Haftvermittlerzusammensetzung:

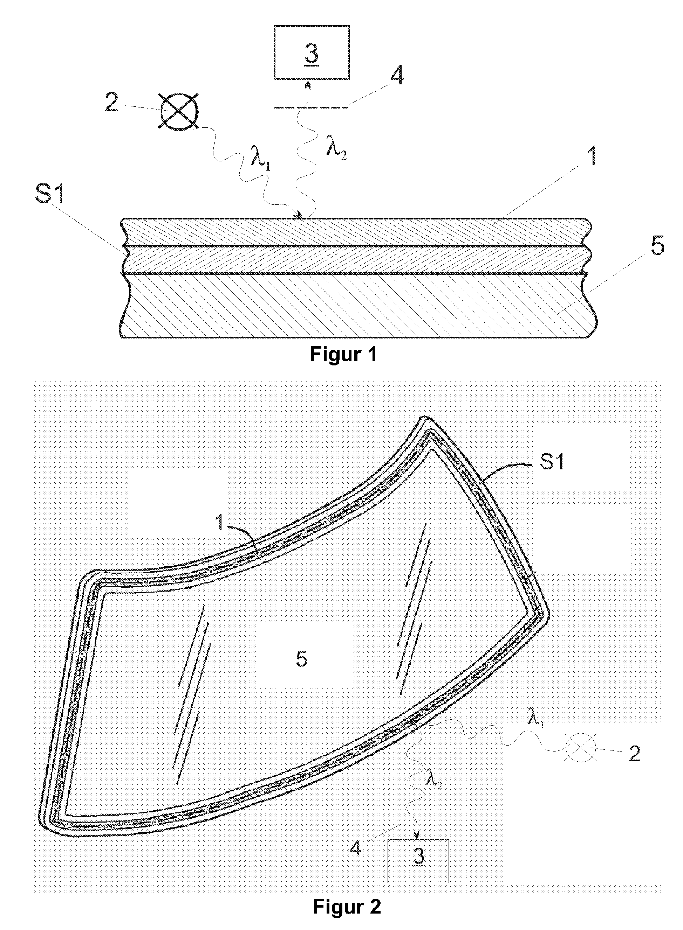

Figur 1 zeigt schematisch einen Querschnitt durch ein Substrat S1, welches sich auf einem Trägermaterial 5 befindet und mit einer Haftvermittlerzusammensetzung 1 beschichtet ist. An diesem Substrat S1 wird ein Detektionsverfahren durchgeführt, wobei das Substrat S1 mittels einer Strahlungsquelle 2 mit einer im UV-Bereich liegenden Strahlung der Wellenlänge λ₁ bestrahlt wird. Durch Anwesenheit einer lumineszierenden Substanz in der Haftvermittlerzusammensetzung 1 emittiert diese eine Strahlung der Wellenlänge λ₂, welche üblicherweise im sichtbaren Lichtbereich liegt und von Auge oder mittels eines Fotodetektors 3 detektiert werden kann. Optional kann dem Fotodetektor ein optischer Filter 4 vorgelagert werden, der insbesondere die Strahlung der Strahlungsquelle 2 mit der Wellenlänge λ₁ vor der Detektierung herausfiltert.
Durch das Detektionsverfahren, wie es in Figur 1 dargestellt ist, kann ein schwarzfarbener Voranstrich auf einem schwarzfarbenen Untergrund sichtbar, beziehungsweise feststellbar, gemacht werden.

Figur 2 zeigt eine perspektivische schematische Darstellung einer bevorzugten Anwendung des in Figur 1 dargestellten Detektionsverfahrens. Dabei wird eine Automobilverglasung 5, deren Glaskeramikrand in diesem Fall das Substrat S1 darstellt und mit der Haftvermittlerzusammensetzung 1 beschichtet ist, mittels einer Strahlungsquelle 2 mit einer Strahlung der Wellenlänge λ₁ bestrahlt. Durch die Anwesenheit einer lumineszierenden Substanz in der Haftvermittlerzusammensetzung 1 emittiert diese wiederum eine Strahlung der Wellenlänge λ₂, welche von Auge oder mittels eines Fotodetektors 3 detektiert werden kann. Wie bereits in Figur 1 dargestellt, kann es nützlich sein, dem Fotodetektor 3 einen optischen Filter 4 vorzulagern.
Durch die Anwendung des Detektionsverfahrens wie in Figur 2 dargestellt, kann einerseits überprüft werden, ob die Haftvermittlerzusammensetzung am dafür vorhergesehen Ort auf dem Substrat S1, in diesem Fall durchgehend auf dem Randbereich der Scheibe, appliziert worden ist und somit eine optimale Haftung gewährleistet werden kann. Andererseits kann bei einem unerwünschten Verlust der Hafteigenschaften überprüft werden, ob die vorgeschriebene Haftvermittlerzusammensetzung wie vorgesehen angewendet wurde.

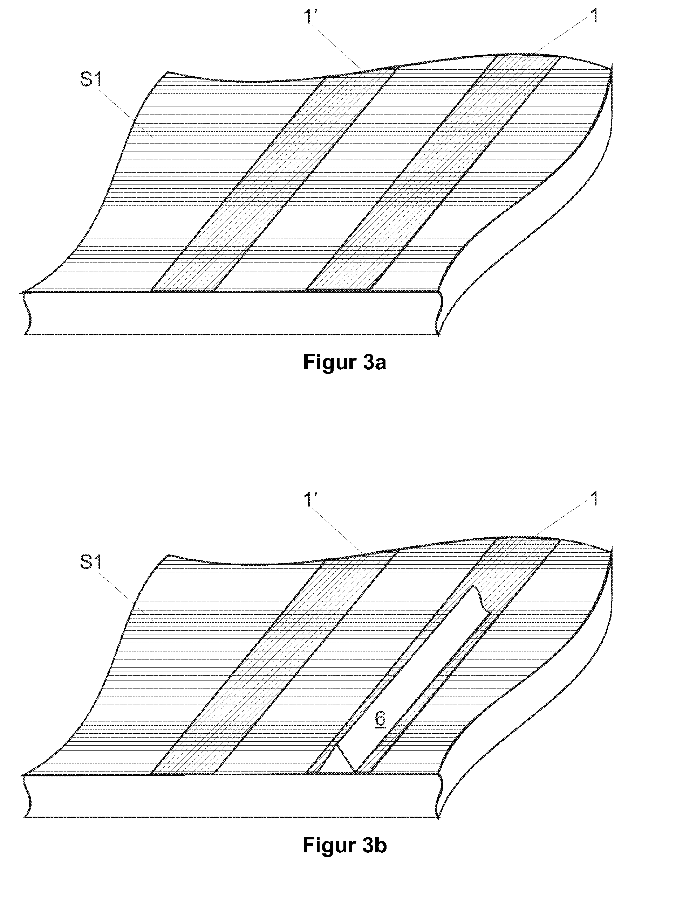

Figur 3a zeigt eine schematische perspektivische Darstellung eines Substrates S1 auf das zwei Bahnen der unterschiedlichen Haftvermittlerzusammensetzungen 1, beziehungsweise 1', appliziert wurden. Die Haftvermittlerzusammensetzungen 1 und 1' eignen sich für unterschiedliche Kleb-und/oder Dichtstoffe und unterscheiden sich auch insofern, dass sie unterschiedliche lumineszierende Substanzen enthalten. Dadurch emittieren beide nach Bestrahlung mit UV-Strahlungen sichtbares Licht.
In einer ersten Variante enthalten die Haftvermittlerzusammensetzungen 1 und 1' lumineszierende Substanzen, die auf Anregung mit UV-Strahlung stark unterschiedlicher Wellenlängen λ₁ und λ₁' sichtbares Licht emittieren. So absorbiert die lumineszierende Substanz in der Haftvermittlerzusammensetzung 1 die Wellenlänge λ₁, während die lumineszierende Substanz in der Haftvermittlerzusammensetzung 1' diese Strahlung der Wellenlänge λ₁ nicht absorbieren kann und demzufolge keine Emission ausgehend von Haftvermittlerzusammensetzung 1' möglich ist. Bei der Bestrahlung eines Substrates S1 mit den aufgetragenen Haftvermittlerzusammensetzungen 1 und 1' mit einer Strahlung der Wellenlänge λ₁ ist somit nur die Haftvermittlerzusammensetzung 1 sichtbar. Wird nun mit einer Strahlung der Wellenlänge λ₁' bestrahlt, so absorbiert lediglich die Haftvermittlerzusammensetzung 1' diese Strahlung und deshalb emittiert auch nur diese Bahn eine Strahlung. Somit kann je nach Wahl der Anregungswellenlänge λ₁, beziehungsweise λ₁', die jeweilige Haftvermittlerzusammensetzung 1, beziehungsweise 1', identifiziert werden.
In einer zweiten, bevorzugten, Variante wird die Probe mit einer Wellenlänge λ₁ bestrahlt und die lumineszierenden Substanzen in den beiden Haftvermittlerzusammensetzungen 1 und 1' emittieren unterschiedliche Wellenlängen λ₂, beziehungsweise λ₂', welche unter Benutzung von jeweiligen Filtern voneinander unterschieden werden können. Durch Detektierung der unterschiedlichen Emissionswellenlängen können die Haftvermittlerzusammensetzungen 1 und 1' voneinander unterschieden werden.

Wird davon ausgegangen, dass das Substrat S1, sowie beide Haftvermittlerzusammensetzungen 1 und 1' Schwarzpigmente enthalten, so sind diese auf dem Substrat S1 bei normalem Tageslicht weder zu erkennen, noch wären die Haftvermittlerzusammensetzungen 1 und 1' voneinander unterscheidbar.
Nach Anwendung eines Detektionsverfahrens, wie es in Figur 1 und Figur 2 beschrieben ist, können jedoch die Bahnen mit den unterschiedlichen Haftvermittlerzusammensetzungen 1 und 1' voneinander unterschieden werden. In Fällen, wo auf demselben Substrat S1 unterschiedliche Klebstoffe auf unterschiedlichen Voranstrichen nebeneinander aufgetragen werden müssen, dient ein solches Detektionsverfahren zweierlei Zwecken. Einerseits kann beispielsweise die schwarze Haftvermittlerzusammensetzung 1 auf dem schwarzen Substrat S1 sichtbar gemacht werden. Andererseits, und wie in Figur 3c dargestellt, kann sichergestellt werden, dass der Klebstoff 6 auf die dafür geeignete und vorgesehene Haftvermittlerzusammensetzung 1, und nicht auf die dafür ungeeignete Haftvermittlerzusammensetzung 1', aufgetragen wird. Somit sind Verwechslungen weitgehend ausgeschlossen und die Gewährleistung eines verlässlichen Haftverbunds ist gegeben.
Das Detektionsverfahren, wie es hier vor allem in Figur 2 beschrieben wird, kann optional teilweise oder vollumfänglich automatisiert durchgeführt werden. Bevorzugt wird dies in Fällen, wo das Verfahren dazu verwendet wird, um zu überprüfen, ob die Haftvermittlerzusammensetzung am dafür vorhergesehen Ort auf dem Substrat S1, im Fall der Figur 2 durchgehend auf dem Randbereich der Fahrzeugscheibe, appliziert worden ist. Dabei können der Auftrag der Haftvermittlerzusammensetzung 1, die Detektierung und der anschliessende Auftrag des Kleb- oder Dichtstoffes unmittelbar nacheinander erfolgen. Unterstützend kann dabei geeignete Software zur Bilderfassung und/oder zur Robotersteuerung beim Auftrag des Voranstrichs und/oder des Kleb- oder Dichtstoffes zum Einsatz kommen.
Bevorzugt kann das Detektionsverfahren während der Offenzeit der Haftvermittlerzusammensetzung 1 noch vor dem Auftragen des Kleb- oder Dichtstoffes durchgeführt werden. Dadurch ist es möglich Substrate, wie Fahrzeugscheiben, die einen mangelhaften Voranstrich erhalten haben, innerhalb eines Linienherstellungsprozesses zu erkennen und auszuschliessen, bevor der Klebstoff darauf appliziert wird. Dies ist besonders vorteilhaft, weil dadurch die unnötige Verschwendung von Klebstoff vermindert werden kann.

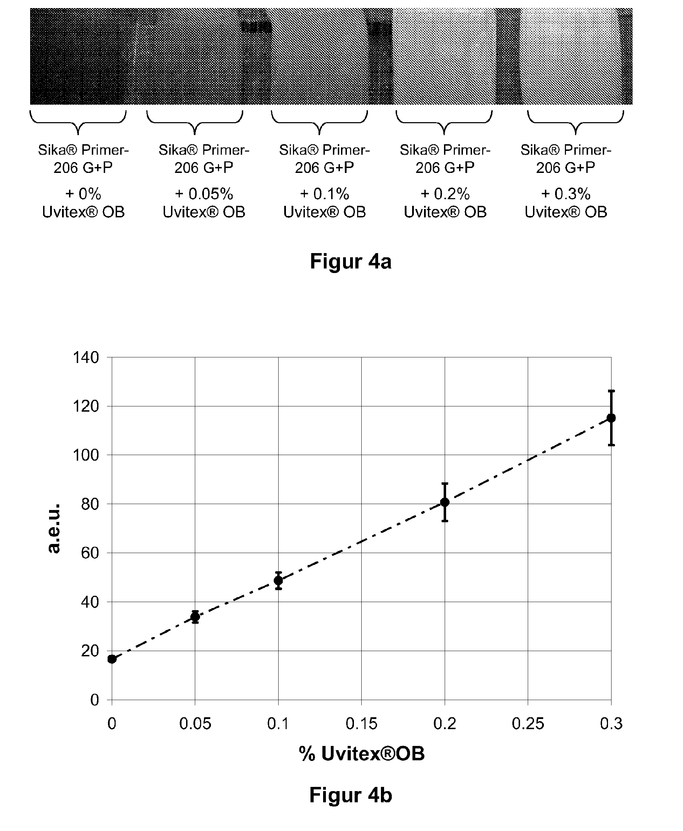

Für die Figuren 4a und 4b wurden verschiedene Konzentrationen an Uvitex® OB, kommerziell erhältlich von Ciba Specialty Chemicals, in Xylol als 5%-ige Lösung zubereitet. Anschliessend wurde die Lösung in der entsprechenden Dosierung dem Sika® Primer-206 G+P beigegeben und mittels eines Dissolvers unter Stickstoff eingemischt, sodass man Haftvermittlerzusammensetzungen mit Uvitex® OB -Konzentrationen von 0.05 Gew.-%, 0.1 Gew.-%, 0.2 Gew.-% und 0.3 Gew.-% erhielt.
Die so hergestellten schwarzen Haftvermittlerzusammensetzungen wurden als Bahnen mit einem Rakel in einer Schichtdicke von 40 µm auf einem Glaskeramik-Prüfkörper der Firma Rocholl GmbH, Deutschland, nebeneinander aufgetragen. Auf demselben Substrat wurde zusätzlich eine Bahn mit Sika® Primer-206 G+P ohne lumineszierende Substanz als Referenz aufgetragen (Blindprobe). Die schwarzen Bahnen auf der schwarzen Glaskeramik sind bei Tageslicht nicht oder nur sehr schwer erkennbar.
Darauf folgend wurde die Probe mit UV-Licht der Wellenlänge zwischen 360 und 380 nm bestrahlt und mit einer Nikon E4300 Digitalkamera fotografiert (Belichtungszeit 1/15 s, ISO Geschwindigkeit ISO-400, F/2.8). Die entstandene Digital-Fotografie wurde mit Hilfe der Bildbearbeitungs-Software Corel® Photo-Paint 11.0 der Firma Corel® UK Limited in die RGB-Kanäle aufgetrennt. Die Darstellung in Figur 4a ist diejenige des Blaukanals.
Figur 4b zeigt eine grafische Darstellung der Abhängigkeit der Intensität der Licht-Emission als Funktion der Konzentration der lumineszierenden Substanz in der Haftvermittlerzusammensetzung.
Dazu wurde der oben beschriebe Glaskeramik-Prüfkörper mit den Bahnen von Haftvermittlerzusammensetzungen unterschiedlicher Uvitex® OB-Konzentrationen mittels Mikroskop untersucht. Die Probe wurde unter dem Mikroskop (Olympus BX51 M, Objektiv 5x, Kameraaufsatz zu CCD-Kamera mit 2048x1536 Bildpunkten) mittels einer Hg-Dampflampe mit UV-Licht der Wellenlängen 420 - 440 nm bestrahlt und die Emission bei Wellenlängen > 475 nm beobachtet. Von den Bildern der entsprechenden Haftvermittlerzusammensetzungsbahnen wurden jeweils Ausschnitte von ca. 0.4 x 0.4 mm für die quantitative Analyse verwendet. Der durchschnittliche Intensitätswert des Blaukanals für einen solchen Bildausschnitt wurde mittels Bildanalyse ermittelt. Aus fünf Bildern mit jeweils neun solcher Ausschnitte wurden pro Konzentration so 45 Intensitätswerte des Blaukanals gemittelt und die Standardabweichung dieser Werte bestimmt. Der mittlere Intensitätswert (a.e.u. = aribtrary emmision unit) des Blaukanals einer Probe wurde gegen deren jeweilige Uvitex® OB-Konzentration aufgetragen wobei ein linearer Zusammenhang mit einem Korrelationskoeffizienten von r² = 0.9991 festgestellt wurde.
Die Ergebnisse dieser in Figur 4a und 4b visualisierten Versuche zeigen, dass mit einem Schwarzpigment, nämlich mit Russ, gefüllte Haftvermittlerzusammensetzungen sich auf einfache Art und Weise auf einem schwarzen Untergrund, nämlich einer schwarzen Glaskeramik, nachweisen, beziehungsweise unterscheiden, lassen.

### Bezugszeichenliste

- 1, 1': Haftvermittlerzusammensetzung mit lumineszierender Substanz
- 2: Strahlungsquelle
- 3: Fotodetektor
- 4: optischer Filter
- 5: Trägermaterial
- 6: Klebstoffraupe
- S1: Substrat 1
- λ₁, λ₁': Strahlungen zweier bestimmter Wellenlängen
- λ₂, λ₂': Strahlungen zweier unterschiedlicher Wellenlängen

## Patentansprüche

1. Haftvermittlerzusammensetzung enthaltend
mindestens eine haftvermittelnde Substanz;
mindestens ein Schwarzpigment;
mindestens eine lumineszierende Substanz.

2. Haftvermittlerzusammensetzung gemäss Anspruch 1, **dadurch gekennzeichnet, dass** die haftvermittelnde Substanz ausgewählt ist aus der Gruppe bestehend aus Organo-Siliziumverbindungen, Organo-Titanverbindungen, Organo-Zirkoniumverbindungen, Polyepoxide, Polyisocyanate und Isocyanat aufweisende Polymere.

3. Haftvermittlerzusammensetzung gemäss Anspruch 2, **dadurch gekennzeichnet, dass** die haftvermittelnde Substanz eine Organo-Siliziumverbindung ist.

4. Haftvermittlerzusammensetzung gemäss Anspruch 2, **dadurch gekennzeichnet, dass** die haftvermittelnde Substanz ein Polyisocyanat, insbesondere ein Isocyanatgruppen aufweisendes Biuret oder ein Isocyanatgruppen aufweisendes Isocyanurat ist.

5. Haftvermittlerzusammensetzung gemäss einem der vorhergehenden Ansprüche, **dadurch gekennzeichnet, dass** das Schwarzpigment ausgewählt ist aus der Gruppe bestehend aus Russ, Eisenoxidschwarz, Chromeisenschwarz, Eisen-Mangan-Kupferoxid, Anilinschwarz, Anthrachinon-Pigmente und Perylen-Pigmente.

6. Haftvermittlerzusammensetzung gemäss einem der vorhergehenden Ansprüche, **dadurch gekennzeichnet, dass** der Anteil Schwarzpigment, insbesondere Russ, 0,1 - 15 Gew.-%, insbesondere 1 - 15 Gew.-%, bevorzugt 5 - 10 Gew.-%, an der gesamten Haftvermittlerzusammensetzung beträgt.

7. Haftvermittlerzusammensetzung gemäss einem der vorhergehenden Ansprüche, **dadurch gekennzeichnet, dass** die Gewichtssumme von haftvermittelnder Substanz und Schwarzpigment ≥ 10 Gew.-%, insbesondere 15 - 70 Gew.-%, bevorzugt 25 - 60 Gew.-%, der gesamten Haftvermittlerzusammensetzung beträgt.

8. Haftvermittlerzusammensetzung gemäss einem der vorhergehenden Ansprüche, **dadurch gekennzeichnet, dass** die Haftvermittlerzusammensetzung zusätzlich mindestens ein Lösungsmittel enthält.

9. Haftvermittlerzusammensetzung gemäss einem der vorhergehenden Ansprüche, **dadurch gekennzeichnet, dass** der Anteil an lumineszierender Substanz 0.01 - 5 Gew.-%, insbesondere 0.1 - 3 Gew.-%, bevorzugt 0.2 - 1 Gew.-%, der gesamten Haftvermittlerzusammensetzung beträgt.

10. Verwendung einer Haftvermittlerzusammensetzung nach einem der Ansprüche 1 bis 9 als Voranstrich für Klebstoffe und/oder Dichtstoffe.

11. Ein mit einer Haftvermittlerzusammensetzung gemäss einem der Ansprüche 1 bis 9 beschichtetes Substrat, **dadurch gekennzeichnet, dass** das Substrat ein Schwarzpigment enthaltendes Substrat, insbesondere ein Schwarzpigment enthaltender Kunststoff, bevorzugt ein Schwarzpigment enthaltender Thermoplast, ist.

12. Ein beschichtetes Substrat gemäss Anspruch 11, **dadurch gekennzeichnet, dass** das Substrat Glaskeramik ist.

13. Verfahren zur Verklebung oder zum Abdichten umfassend die Schritte
i) Applikation einer Haftvermittlerzusammensetzung gemäss einem der Ansprüche 1 bis 9 auf ein zu verklebendes oder abzudichtendes Substrat **S1;**
ii) Applikation eines Klebstoffes oder Dichtstoffes auf die abgelüftete Haftvermittlerzusammensetzung, welche sich auf dem Substrat S1 befindet;
iii) Kontaktieren des Klebstoffs oder Dichtstoffes mit einem zweiten Substrat S2;
oder
i') Applikation einer Haftvermittlerzusammensetzung gemäss einem der Ansprüche 1 bis 9 auf ein zu verklebendes oder abzudichtendes Substrat **S1;**
ii') Applikation eines Klebstoffes oder Dichtstoffes auf die Oberfläche eines zweiten Substrates S2;
iii') Kontaktieren des Klebstoffes oder Dichtstoffes mit der abgelüfteten Haftvermittlerzusammensetzung, welche sich auf dem Substrat S1 befindet;
oder
i") Applikation einer Haftvermittlerzusammensetzung gemäss einem der Ansprüche 1 bis 9 auf ein zu verklebendes oder abzudichtendes Substrat **S1;**
ii") Ablüften der Haftvermittlerzusammensetzung;
iii") Applikation eines Klebstoffes oder Dichtstoffes zwischen die Oberflächen des Substrates S1 und S2;
wobei das zweite Substrat S2 aus demselben oder unterschiedlichem Material wie das Substrat S1 besteht.

14. Verfahren gemäss Anspruch 13, **dadurch gekennzeichnet, dass** sich an den Schritt iii), iii') oder iii") ein Schritt iv) des Aushärtens des Kleb- oder Dichtstoffes anschliesst.

15. Verfahren gemäss einem der Ansprüche 13 und 14, **dadurch gekennzeichnet, dass** das Substrat S1 ein Schwarzpigment enthaltendes Substrat ist.

16. Verfahren gemäss Anspruch 15, **dadurch gekennzeichnet, dass** das Substrat S2 ein Lack oder ein lackiertes Metall oder eine lackierte Metalllegierung ist.

17. Artikel, welcher nach einem Verfahren gemäss einem der Ansprüche 13 bis 16 verklebt wurde.

18. Artikel nach Anspruch 17, **dadurch gekennzeichnet, dass** der Artikel ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels ist.

19. Verfahren zur Detektierung einer Haftvermittlerzusammensetzung (1), gemäss einem der Ansprüche 1 bis 9, auf einem Substrat, umfassend die Schritte
a) Bestrahlen des mit einer Haftvermittlerzusammensetzung (1) beschichteten Substrates (S1) mit einer Strahlung der Wellenlänge λ₁ von 240 bis 400 nm;
b) Detektierung der von der lumineszierenden Substanz emittierten Strahlung der Wellenlänge λ₂, insbesondere mittels eines Fotodetektors (3).

20. Verfahren nach Anspruch 19, **dadurch gekennzeichnet, dass** ein optischer Filter (4) zwischen Fotodetektor (3) und Haftvermittlerzusammensetzung (1) angeordnet ist, welcher insbesondere die Strahlung der Wellenlänge λ₁ absorbiert.
